Europäisches Patentamt

European Patent Office

Office européen des brevets

(19)

(11) **EP 1 199 281 B1**

(12) **EUROPEAN PATENT SPECIFICATION**

(45) Date of publication and mention
of the grant of the patent:
**28.12.2005 Bulletin 2005/52**

(51) Int Cl.$^7$: **C01B 31/02**

(21) Application number: **00122854.3**

(22) Date of filing: **20.10.2000**

(54) **Process for producing a metal fulleride**

Verfahren zur Herstellung eines metallischen Fulleriden

Procédé de préparation d'un fullérènure métallique

(84) Designated Contracting States:
**AT BE CH CY DE DK ES FI FR GB GR IE IT LI LU
MC NL PT SE**

(43) Date of publication of application:
**24.04.2002 Bulletin 2002/17**

(73) Proprietor: **Pirelli & C. S.p.A.**
**20123 Milano (IT)**

(72) Inventors:
• **Zaopo, Antonio**
**20137 Milano (IT)**
• **Dubitzky, Yuri A.**
**20159 Milano (IT)**
• **Ricco, Mauro**
**43100 Parma (IT)**
• **Sartori, Andrea**
**43010 Fontana (Parma) (IT)**

(74) Representative: **Giannesi, Pier Giovanni et al**
**Pirelli S.p.A.**
**Industrial Property Dept.**
**Viale Sarca, 222**
**20126 Milano (IT)**

(56) References cited:
**WO-A-93/11067**

• **HIMMEL, KLAUS ET AL: "Synthesis of
[Ni(NH3)6]C60.cntdot.6NH3 via ion exchange in
liquid ammonia--a new, versatile access to ionic
fullerides" CHEM. COMMUN. (CAMBRIDGE)
(1998), (11), 1205-1206 , 1998, XP002164024**
• **HIMMEL, KLAUS ET AL: "On the geometry of the
fulleride dianion C602- in crystalline fullerides.
Syntheses and crystal structures of
[M(NH3)6]C60.6NH3 (M = Mn2+, Cd2+)" EUR. J.
INORG. CHEM. (1998), (8), 1183-1186 , 1998,
XP002164025**
• **FULLAGAR, WILFRED K. ET AL: "Reversible
alkali-metal reduction of C60 in liquid
ammonia;first observation of near-infrared
spectrum of C605-" J. CHEM. SOC., CHEM.
COMMUN. (1993), (6), 525-7 , 1993, XP002164026**

## Description

The present invention relates to a process for producing a metal fulleride.

In particular, the present invention relates to a process for producing a metal fulleride by an ion exchange reaction in a liquid medium.

More particularly, the present invention relates to a process for producing a metal fulleride by an ion exchange reaction in liquid ammonia.

Recently there has been a remarkable interest in organic materials which possess conductive properties or which can be suitably doped so as to show conductive properties.

For example, organic materials are generally easily formed in thin films in order to be used as conductive components in devices such as switches, antistatic devices or magnetic shielding.

Among said organic materials, typically used carbon-based conductors are graphite and polyacetylene.

Graphitic materials, characterized in having an infinite sheet-like structure of carbon atoms, present conductivity values in the range from $10^3$ to $10^5$ Siemens/cm; however they are rather intractable and can not be used in a plurality of applications.

Polyacetylene, instead, is known to possess conductivity values higher than $10^4$ Siemens/cm only if it is suitably doped.

Other organic conductors, such as those based on tetrathiafulvalene, are known to have high conductivity properties ($10^3$ Siemens/cm); however they are difficult to be shaped into desired geometries.

Among the organic materials, those based on fullerenes are generally known as insulators and many attempts have been made to modify their structure in order to improve their conductivity.

Fullerenes represent a particular allotropic form of carbon, and are typically represented by 12 pentagons combined with a plurality of hexagons to form a cage structure.

The pentagons are required in order to allow the curvature and the closure of the surface upon itself.

Nowadays, the most abundant species of identified fullerenes is the $C_{60}$ molecule or "Buckminster-fullerene" or "buckyball".

$C_{60}$ fullerene is a hollow molecule the carbon atoms of which are located at the vertices of said 12 pentagons and possessing 20 hexagons arranged to form an icosahedron.

More particularly, the $C_{60}$ fullerene molecule consists of 60 carbon atoms joined together to form a cage structure with 20 hexagonal and 12 pentagonal faces symmetrically arrayed in a soccer ball-like structure.

$C_{60}$ fullerene molecules form a close-packed solid material having a face-centered cubic structure.

The inner hollow space of the fullerene can be used to accomodate any metal ion inside (i.e., endohedral) or outside (i.e., exohedral) the fullerene cage.

The second most abundant species of identified fullerenes is $C_{70}$ molecule, said molecule containing 12 pentagons combined with 25 hexagons.

The $C_{70}$ fullerene molecule presents a shape which is reminiscent of a rugby ball.

Furthermore, fullerene molecules containing from 30 to many hundreds carbon atoms have been detected by mass spectrometry.

Fullerene films can be applied to a suitable support by using different techniques, such as impregnation or spin-coating (i.e., obtaining a coating from a solution by using a centrifuge) from fullerene solutions as well as deposition from a gas (vapour) phase.

However, the obtained film exhibits very low conductivity properties since fullerenes are in their zero oxidation state.

Therefore, in order to enhance conductivity of a fullerene, it was proposed to intercalate the latter by one or more alkali metals.

For instance, US-5,294,600 discloses a superconducting material which comprises a fullerene doped with Rubidium and Caesium. The production process of said material comprises at least one of the following processes: a) ultrasonically solid-phase mixing of an alkali metal or metals and a fullerene before heat treatment; b) finely pulverizing a solid-phase fullerene before mixing with an alkali metal or metals; c) annealing a sintered body of an alkali metal or metals and a fullerene while heating and then gradually cooling.

It is known that metal fulleride compositions containing fullerene monoanions, e.g. $C_{60}^{-1}$, may be used as semiconductors (P.M. Allemand et al., J. Am. Chem. Soc., 113, 2780 (1991)), while those containing fullerene trianions, e.g. $C_{60}^{-3}$, and alkali metal cations having a valence of +1 may be used as superconductors (A. F. Hebard et al., Nature, 350, 600 (1991)).

Therefore, due to an increasing interest in superconductivity, many different methods of metal fullerides synthesis have been arranged, above all since the discovery in 1991 of superconductivity in $K_3C_{60}$.

For instance, US-5,324,495 discloses a method for obtaining a metal fulleride composition by contacting a metal and a fullerene in a solvent or a mixture of solvents in which the fullerene is at least partly soluble. Typically the fullerene is dissolved or slurried in an appropriate solvent and the metal is added thereto. Appropriate solvents comprise toluene, benzene, nitriles, liquid $SO_2$, sulfolanes and the like.

Similarly to US-5,324,495, the document "Synthesis and characterization of alkali metal fullerides: $A_xC_{60}$" by D. W. Murphy, M. J. Rosseisnky et al, J. Phys. Chem. Solids, vol. 53, pages 1321-1332, Ed. 1992, discloses a method for producing a metal fulleride by means of a redox reaction. In particular, the method disclosed therein consists in contacting an alkali metal and a $C_{60}$ fullerene in a liquid ammonia medium. Therefore, stoichiometric amounts of an alkali metal and of a $C_{60}$ fullerene are prepared in a powdery state and introduced inside of a flask under high vacuum. Successively, the obtained metal/fullerene mixture is cooled by means of a dry-ice/isopropanol slush and anhydrous ammonia is condensed into the flask. Since starting $C_{60}$ fullerene, i.e. in its zero oxidation state, is insoluble in liquid ammonia, the complete dissolution of the fullerene anion in liquid ammonia demonstrates that a charge transfer from metal to starting $C_{60}$ fullerene, and the consequent formation of the metal fulleride, have occured. Then the flask is heated up to 150°C under vacuum conditions for about half an hour so as to allow the complete removal of ammonia from the solution by evaporation.

US-5,223,479 and US-5,348,936 relate to metal-doped fullerenes and, in particular, to a stoichiometrically-controlled method for the preparation thereof. Said method consists in preparing a more fully doped fullerene, preferably a metal-saturated fullerene, and then diluting the more fully doped moiety by contacting it, inside of a dry box, with a previously weighed amount of non-doped fullerene to give a desired stoichiometry. This accurate and difficult stoichiometric control is extremely important to be achieved since the superconductivity of a metal doped fullerene is sensitive to the exact degree of doping.

A further method to obtain metal fullerides consists in carrying out an intercalation reaction in vapour phase of suitable metal ions into a fullerene, i.e. by means of a vapour phase deposition.

For instance, US-5,391,323 and US-5,698,497 relate to highly conducting tractable materials (conductivity greater than 500 Siemens/cm at room temperature) which are obtained by electronic structure modifications of fullerenes. According to one embodiment disclosed therein, electrons are added to the fullerene structure by charge transfer from a species more electropositive than the fullerene. For example, it is possible to electronically modulate a fullerene by subjecting it to an alkali metal vapour. Alkali materials, such as Sodium, Potassium, Rubidium and Caesium, are significantly more electropositive than fullerene and therefore donate electrons to the fullerene structure. As described in US-5,391,323, said intercalation in a vapour phase can occur by contacting stoichiometric amounts of fullerene and metal inside of a glass tube in a glove box (see Examples 9 or 11) or by previously producing a fullerene layer at suitable pressure and temperature conditions (see Examples 1 and 3). The intercalation in the vapour phase is achieved by evacuating the glass tube and heating (annealing) it by immersion in an oil bath (as described in Example 3) or by placing it in a furnace at 403 K for 12 hr and then at 703 K for more that three weeks with intermittent shaking.

A further method to obtain a metal fulleride consists in electrochemically depositing the latter from suitable starting solutions.

For instance, in order to enhance the conductivity of a fullerene coating, it is known in the art to preliminarily deposit a fullerene thin film on a suitable support and successively doping said film by carrying out its electrochemical reduction in an organic electrolytic solution containing a suitable cation, such as an alkali metal cation, to obtain the corresponding fulleride, i.e. the fullerene salt (see, for instance, Trans. Mat. Res. Soc. Jpn. / 1994 Elsevier Science B.V. / Vol. 14B / pages 1107-1112).

WO 93/11067 discloses a method for producing solutions or precipitates of fullerene by electrochemical reduction in an organic electrolyte, said organic electrolyte containing a solution of an alkali metal salt and C60 fullerene or $C_{70}$. According to said document a suitable electric potential is applied to a nonaqueous solution of fullerenes in the presence of a soluble salt containing a cation for a time sufficient to generate fullerene anions in the solution. According to a further embodiment, the fulleride compounds are prepared in the solid state.

Moreover, it is known in the art that a fulleride coating can be obtained on a gold or a platinum electrode by cathodic deposition from an electrolyte consisting of an acetonitrile solution of $C_{60}^{2-}$ and $C_{60}^{3-}$, said solution being respectively prepared by bulk controlled-potential electroreduction (at -1,2 V) of a $C_{60}$ suspension in solutions of $CsAsF_6$, $KPF_6$ or $Ca(PF_6)_2$ and by bulk controlled-potential electroreduction (at -1,6 V) of a $C_{60}$ suspension in solutions of $(TBA)ClO_4$ (see "Synthesis and Electrodoping of $C_{60}^{n-}$ (n = 0, 1, 2, 3) Films: Electrochemical Quartz Microbalance Study in Acetonitrile Solutions of Alkali Metal, Alkaline-Earth Metal, and Tetra-n-butylammonium Cations" by W. Koh, D. Dubois, W. Kutner, M. T. Jones, K. Kadish; J. Phys. Chem. 1993, 97, 6871-6879).

A further method to obtain a metal fulleride consists in an ion exchange reaction by means of a cation exchange resin.

For instance, document "Synthesis and NMR characterization of new $C_{60}^{3-}$ salts by ion exchange" (by R. Ziebarth, S.M. Lee, V.A. Stenger and C. Pennington, Electrochemical Society Proceedings, Volume 95-10, pages 316-329) discloses new $C_{60}^{3-}$ salts containing polyatomic cations prepared by using cation exchange resins in anhydrous liquid ammonia. In details, by interaction of the appropriate form of a cation exchange resin with $Rb_3C_{60}$ in liquid ammonia, three new $C_{60}$ salts, specifically $[(CH_3)_4N]_3C_{60}$, $[(Et)_4N]_3C_{60}$ and $[(CH_3)_4P]_3C_{60}$, have been prepared. According to the method disclosed therein, ion exchange was performed in anhydrous liquid ammonia at -45°C using a 3-4 fold excess of the cation exchange resin with $Rb_3C_{60}$. $Rb_3C_{60}$ and the ion exchange resin were placed in a quartz reaction tube, the system was evacuated and the liquid ammonia was condensed on the mixture at -78°C. The reaction was warmed to -45°C resulting in formation of a dark brownish-black precipitate covered by a clear solution. The reaction was held at -45°C for 1 hr prior to removal of ammonia by evaporation which left a dark brownish-black powder mixed with the ion exchange resin. Isolation of the sample from the resin was accomplished by dissolving the sample in acetonitrile and filtering out the resin under inert gas. Evaporation of the acetonitrile left the desired brownish-black product.

According to the Applicant, the processes of the above described prior art show a plurality of drawbacks and disadvantages which are mainly related to complexity and duration of the different steps involved in said processes, as well as to poor control of the intercalation degree of said alkali metals.

For instance, the process described in document "Synthesis and characterization of alkali metal fullerides: $A_xC_{60}$" cited above, consisting in carrying out a redox reaction between a $C_{60}$ fullerene and a metal in a liquid ammonia medium, requires that a metal soluble in said medium is to be selected, generally an alkali or an alkaline-earth metal. Furthermore, the metal and the fullerene to be used as starting materials have to be chosen based on the redox potentials of each material so that the reaction is thermodynamically possible at the particular reaction temperature in the particular solvent.

Despite the apparent semplicity of said methods based on a redox reaction, they are stoichiometrically difficult to be controlled. In fact, since it is generally desirable to use a minimum amount of the relatively expensive fullerene, the amount of metal required is typically quite small and, therefore, difficult to accurately dispense.

Furthermore, since the superconductivity of metal doped fullerenes is very sensitive to the degree of doping, said methods do not ensure metal fullerides of controlled superconductivity. In order to overcome said drawbacks, documents US-5,223,479 and US-5,348,936 have suggested an improvement to said methods, but accurate and difficult stoichiometric controls are still needed, as disclosed above.

With reference to the methods based on the intercalation of metal ions into a fullerene in a vapour phase it has to be noted that, once again, it is very difficult to accurately control the stoichiometry and the morphology of the resulting metal fullerides, even with a very accurate and time consuming annealing.

Moreover, a further limitation of said methods comes from the evaporation temperature of the metal to be used. In fact, if said temperature is too high or the metal does not have a vapour phase, said particular metal fullerides can not be produced by using intercalation on a vapour phase.

Furthermore, the intercalation of large ions (like alkaline-earth ions) in $C_{60}$ fullerene lattice interstices by means of diffusion in the gas phase is quite difficult to be carried out due to the low mobility of said large ions. Besides, very long annealing times (e.g., several months) at high temeperatures (e.g., 500-600°C) are usually required to obtain a uniformly doped sample.

With reference to the process according to which a preliminary deposition of a fullerene film is followed by a doping phase of said film by means of its electrochemical reduction so that a fulleride coating is obtained, it can be pointed out that said electrochemical reduction is accompanied by a transfer of fullerene anions into the electrolyte solution, thus causing degradation and dissolution of the obtained fulleride coating. The fulleride coating dissolution occurs also in the process according to document WO 93/11067.

As to the fulleride coating deposition carried out by Koh et al. cited above, it has to be noted that, since neutral $C_{60}$ fullerene is insoluble in acetonitrile, the suspension of neutral $C_{60}$ fullerene was firstly reduced to obtain the desired $C_{60}^{n-}$ solution and then the obtained $C_{60}^{n-}$ was oxydized to obtain the deposition of the fulleride coating on the electrode surface, the fulleride being insoluble in acetonitrile. However this method is rather complex and requires at least two separate steps, i.e. the reduction of neutral $C_{60}$ fullerene followed by the oxydation of reduced $C_{60}^{n-}$ species thus obtained. Moreover, this method reveals very high sensitivity of fullerene anions to oxygen and water traces due to $C_{60}$ epoxidation and other subsequent reactions.

With reference to document "Synthesis and NMR characterization of new $C_{60}^{3-}$ salts by ion exchange" cited above, the ion exchange reaction is carried out by means of a cation exchange resin, the latter being used for the introduction of new cations into $C_{60}^{3-}$ salts. The main disadvantages of the above described procedure is a limited number of metal cations which can be used and the extremely slow rate of said exchange reaction.

Furthermore, the procedure of preparation of the resin, e.g. the drying step thereof, has to be particularly accurate since the described method is very sensitive to even trace amounts of air and moisture. For instance, following preparation of the tetraalkyl ammonium or phosphonium form of the resin (i.e., the ion exchange resin was prepared in the appropriate cationic form by passing a saturated aqueous solution of $[(CH_3)_4N]Cl$ or $[(CH_3)_4P]Cl$ through a column of Amberlite IRP-69 in the $Na^+$ form), all water was carefully removed (taking care not to collapse the resin pore structure) by repeatedly washing the latter with anhydrous liquid ammonia and successively drying it under dynamic vacuum at room temperature. From the foregoing, it is clearly apparent that the use of a cation exchange resin requires very accurate and time consuming process steps.

The Applicant has now found a process for producing a metal fulleride which involves very few and simple steps remarkably decreasing the complexity and the duration of the processes known in the art.

Furthermore, the process according to the present invention advantageously increases the number of metal cations which can be suitably used for said ion exchange reaction.

Therefore, the present invention relates to a process for producing a metal fulleride, comprising the step of reacting in a liquid medium:

- a first metal fulleride having, as counterion, a cation of a first metal forming a salt substantially insoluble in said liquid medium, and
- a salt of a second metal substantially soluble in said liquid medium,

so as to form a second metal fulleride having, as counterion, a cation of said second metal.

In the following, the term "fullerene" indicates any hollow, all carbon-containing molecule having carbon atoms located at the vertices of 12 pentagons (five membered carbon rings) combined with a plurality of hexagons (six membered carbon rings), said fullerene corresponding to the general formula $C_{2n}$ wherein $n \geq 12$.

According to a preferred embodiment of the present invention the fullerene molecule is $C_{60}$ fullerene.

In the present description and claims, the term "fulleride" indicates a salt of a fullerene, namely a neutral molecule that can be represented by the formula $A_n$ $(C_x)_m$ wherein $C_x$ is a fullerene anion (preferably an anion of $C_{60}$), m is the number of fullerene anions in the metal fulleride composition and is equal to the absolute value of the valence of the metal, wherein A is a metal cation and n is a number that renders the composition neutral in charge. In particular, in the case a $C_{60}$ fullerene is used, n is from +1 to +3 depending on the negative charge of the $C_{60}$ fullerene which ranges from -1 to -3.

As mentioned above, the ion exchange reaction of the present process occurs in a liquid medium between a first metal fulleride, having as counterion a cation of a first metal, and a salt of a second metal, said salt being soluble in said liquid medium.

Preferably said liquid medium is selected from: liquid ammonia, trimethylamine, triethylamine. More preferably said liquid medium is liquid ammonia.

Preferably said salt is a iodide.

According to the invention, the counterion of said first metal fulleride is selected so as to form a salt which is substantially insoluble in said liquid medium.

In the present description and in the claims, the wording "a salt substantially insoluble in a liquid medium" means a salt having a solubility in said liquid medium equal to or lower than 0.1 mol/l at the reaction tempertaure.

With the term "reaction temperature" is intended the temperature at which the reaction medium is in the liquid state. For instance, in the case liquid ammonia is used, said reaction temperature is selected from -50°C and -30°C.

Therefore, said first metal, forming said salt substantially insoluble in said liquid medium, is preferably selected from the group comprising alkali and alkali-earth metals.

Even more preferably, said first metal is selected from the group comprising: Lithium (Li), Sodium (Na) and Calcium (Ca).

According to the present invention, the first metal fulleride reacts with a salt of a second metal, said salt being substantially soluble in the liquid medium, preferably in liquid ammonia.

In the present description and in the claims, the wording "a salt substantially soluble in the liquid medium" means a salt having a solubility in the liquid medium equal to or higher than 6 mol/l at the reaction tempertaure.

Therefore, said second metal, forming said salt substantially soluble in liquid ammonia, is preferably selected from the group comprising: transition elements, Lanthanides (rare-earth elements) and Actinides.

More preferably, said second metal is selected from the group comprising: Potassium (K), Rubidium (Rb), Gadolinium (Gd), Lanthanum (La).

According to the present invention, the starting first metal fulleride can be obtained in any suitable manner. For instance, if a $Li_3C_{60}$ fulleride is used, it can be obtained by reacting Lithium azide and $C_{60}$ fullerene under dynamic pressure and then by heating up to 180°C.

Alternatively $Li_3C_{60}$ fulleride can be obtained by the direct redox reaction of metallic Lithium with $C_{60}$ fullerene in a liquid medium, such as liquid ammonia.

According to the invention, the present process comprises the step of separating the liquid medium from the resulting mixture of the ion exchange reaction.

Preferably said separation is carried out by evaporation. Therefore, the resulting product of said process substantially consists in a mixture of the desired metal fulleride with the obtained salt which is substantially insoluble in the liquid medium.

According to a further embodiment of the invention, the present process comprises the step of separating the obtained salt from the resulting mixture of the ion exchange reaction.

Preferably said separation of the obtained salt is carried out by filtering.

According to said further embodiment, successively to said separating step of the obtained salt, the present process comprises the step of separating the liquid medium from the metal fulleride.

Preferably said separation is carried by evaporation.

Some illustrative and non-limitative examples will now be given to describe the invention in further detail.

## EXAMPLE 1

## Synthesis of $GdC_{60}$

### a) Synthesis of $Li_3C_{60}$

0.072 g of $C_{60}$ fullerene (purity 99.9% - produced by Southern Chemicals Ltd.) were mixed with 0.0147 g of Lithium azide ($LiN_3$) (purity 95%) inside of a glove-box under Argon atmosphere (Oxygen concentration lower than 1.0 ppm, water vapour concentration lower than 1.0 ppm). Inside of the glove-box the $C_{60}$ fullerene / Lithium azide mixture was mechanically crushed into a fine powder and introduced into a quartz test tube. A dynamic pressure of $10^{-6}$ Torr was reached into said test tube and a temperature growth from 20°C up to 120°C at a 30°C/hr heating rate and, successively, from 120°C up to 180°C at a 5°C/hr heating rate was set up. Under such pressure and temperature conditions the starting Lithium azide was subjected to thermal decomposition and a first metal fulleride, i.e. $Li_3C_{60}$, was obtained in accordance with the following reaction:

$$C_{60} + 3\ LiN_3 \rightarrow Li_3C_{60} + 9/2\ N_2\uparrow \qquad (1)$$

All the procedures concerning $Li_3C_{60}$ preparation and handling are carried out in the glove box under Argon atmosphere as described above.

### b) Synthesis of $GdC_{60}$

The $Li_3C_{60}$ amount resulting from reaction (1) (i.e., 0.074 g) was mixed with an amount of 0.0538 g of anhydrous Gadolinium iodide ($GdI_3$) (purity 99.9% - produced by Sigma Aldrich) inside of a glove-box under Argon atmosphere as described in step a). Inside of the glove-box the $Li_3C_{60}$ / $GdI_3$ mixture was mechanically crushed into a fine powder and introduced into a quartz test tube inside of which a reduced pressure value of about $10^{-3}$ Torr was established. A suitable amount of ammonia in the gaseous state (purity 99.99% - produced by Sigma Aldrich) was made to enter into the test tube by connecting it with an ammonia reservoir. Successively, the test tube was cooled to a temperature of about -55°C by introducing it into a methanol bath cooled by a Neslab Model CC-100 freezing finger and the temperature was controlled by a Eurotherm 2408 Model. Under said pressure and temperature conditions the anhydrous ammonia entering the test tube began to condense. When an amount of about 7 ml of liquid ammonia was present inside the test tube, its condensation was stopped by heating the reaction mixture (i.e., $Li_3C_{60}$, $GdI_3$ and liquid ammonia) from -55°C up to -40°C. The reaction mixture was maintained at -40°C for about 40 minutes under intensive stirring by means of a Teflon covered magnetic stirring bar. Therefore,

$GdC_{60}$ metal fulleride was produced according to the following ion exchange reaction:

$$Li_3C_{60} + GdI_3 \rightarrow GdC_{60} + 3\ LiI\downarrow \qquad (2)$$

At the end of the stirring operation the temperature of the methanol bath was increased up to -30°C and the liquid ammonia slowly evaporated. After ammonia evaporation, the $GdC_{60}$ / LiI mixture was heated, under dynamic vacuum of about $10^{-3}$ Torr, from -30°C to room temperature and kept at this temperature for about 30 minutes, and successively heated, under high vacuum of about $10^{-3}$ Torr, up to 110°C. In order to remove any possible ammonia trace still present inside of the obtained mixture, the latter was maintained at 110°C for about 15 hr.

The obtained $GdC_{60}$ / LiI mixture was successively introduced into the glove-box and crushed into a fine powder. Some of it was sealed into a pyrex test tube, under a Helium atmosphere, and some into 0.5 mm diameter quartz capillaries to carry out, respectively, NMR and X-Ray/ESR characterizations.

NMR spectrum of the $GdC_{60}$/ LiI mixture was performed by using a Stelar Spinmaster solid state NMR spectrometer working on $^{13}C$ isotope at a frequency of about 50 MHz. The broad signal (about 10 kHz) of the NMR spectrum having a fast relaxation time ($t_1 = 0.46\pm0.02$ s), if compared to that of a C60 fullerene, was typical of $C_{60}^{-3}$ fullerides (i.e., of metal fullerides having a negative charge of -3 on the cage). Broad signal and fast relaxation time confirmed the complete charge transfer from Gd to C60 fullerene and, therefore, the production of the desired metal fulleride $GdC_{60}$.

X-Ray diffraction measurements have been carried out on a diffractometer Siemens (Model D 500). The diffraction spectrum clearly showed the presence of the peaks corresponding to the obtained LiI crystals as resulting products of the above mentioned ion exchange reaction (2).

ESR spectra of the $GdC_{60}$ / LiI mixture were obtained by using a Bruker spectrometer (Model ER 200 D) at a temperature of about 90 K. The spectrum of the starting $GdI_3$ was characterized by a very broad signal with peak to peak linewidth of about $\Delta H_{pp} = 3101$ Gauss and a g-value of about 2.3199. The spectra of the obtained $GdC_{60}$ / LiI mixture were characterized by a narrow signal with peak to peak linewidth of about $\Delta H_{pp} = 5.4$ Gauss and a g-value of about 2.0047, said values being characteristic of $C_{60}^{-3}$ fullerides. Furthermore, said spectra demonstrated the complete absence of the starting $GdI_3$ and, therefore, the complete occurred charge transfer from Gd to $C_{60}$ fullerene.

## EXAMPLE 2

### Synthesis of $K_3C_{60}$

a) Synthesis of $Li_3C_{60}$

Said first step was carried out as previously described in Example 1.

b) Synthesis of $K_3C_{60}$

The $Li_3C_{60}$ amount resulting from reaction (1) (i.e., 0.074 g), was mixed with 0.0498 g of anhydrous Potassium iodide (KI) (purity 99.998% - produced by Sigma Aldrich) inside a glove-box under the same conditions and according to the same operating procedure of Example 1. Therefore, $K_3C_{60}$ metal fulleride was produced according to the following ion exchange reaction:

$$Li_3C_{60} + 3\ KI \rightarrow K_3C_{60} + 3\ LiI\downarrow \qquad (3)$$

The obtained $K_3C_{60}$ / LiI mixture, resulting form reaction (3), was subjected to magnetic susceptibility measurements in order to reveal the presence of a superconducting transition temperature. The temperature dependence of the magnetization of the obtained mixture revealed a jump at 18 K showing the presence of a superconducting phase having a transition temperature ($T_c$) equal to 18 K, a value typical of a superconductive $K_3C_{60}$ material. A magnetometer (Quantum Design SQUID magnetometer equipped with a superconducting 1 T magnet) was used to perform magnetic susceptibility measurements in the range from liquid helium (the mixture was introduced into a test tube under Helium atmosphere) to room temperature.

Said measurements demonstrated the presence of a large (more than 90%) superconducting fraction corresponding to the production of $K_3C_{60}$.

## Claims

1. Process for producing a metal fulleride, comprising the steps of:

   - providing a first metal fulleride having, as counterion, a cation of a first metal;
   - reacting in a liquid medium said first metal fulleride and a salt of a second metal, said salt of a second metal being substantially soluble in said liquid medium, said step of reacting comprising the steps of:

     - forming a second metal fulleride having, as counterion, a cation of said second metal, and

     - forming a salt of said first metal, said salt being substantially insoluble in said liquid medium;

     - separating said liquid medium.

2. Process according to claim 1, further comprising the step of separating said salt substantially insoluble in said liquid medium.

3. Process according to claim 2, **characterized in that** the step of separating the liquid medium is carried out before the step of separating the salt substantially insoluble in the liquid medium.

4. Process according to claim 2, **characterized in that** the step of separating the liquid medium is carried out after the step of separating the salt substantially insoluble in the liquid medium.

5. Process according to claim 2, **characterized in that** said salt substantially insoluble in said liquid medium is separated by filtering.

6. Process according to claim 1, **characterized in that** said liquid medium is separated by evaporation.

7. Process according to claim 1, further comprising the step of separating said second metal fulleride.

8. Process according to anyone of the preceding claims, **characterized in that** said liquid medium is selected from: liquid ammonia, trimethylamine, triethylamine, or mixture thereof.

9. Process according to anyone of the preceding claims, **characterized in that** said first metal is selected from the group comprising alkali and alkali-earth metals.

10. Process according to claim 9, **characterized in that** said first metal is selected from the group comprising: Lithium, Sodium and Calcium.

11. Process according to anyone of the preceding claims, **characterized in that** said second metal is selected from the group comprising: transition elements, Lanthanides and Actinides.

12. Process according to claim 11, **characterized in that** said second metal is selected from the group comprising: Potassium, Rubidium and Gadolinium.

## Patentansprüche

1. Verfahren zur Herstellung eines Metallfullerids, das die folgenden Schritte umfaßt:

- Bereitstellen eines ersten Metallfullerids mit einem Kation eines ersten Metalls als Gegenion,
- Umsetzen des ersten Metallfullerids und eines Salzes eines zweiten Metalls in einem flüssigen Medium, wobei das Salz eines zweiten Metalls im wesentlichen löslich ist in dem flüssigen Medium, wobei der Schritt des Umsetzens die folgenden Schritte umfaßt:

  - Bilden eines zweiten Metallfullerids mit einem Kation des zweiten Metalls als Gegenion und
  - Bilden eines Salzes des ersten Metalls, wobei das Salz in dem flüssigen Medium im wesentlichen unlöslich ist;

- Abtrennen des flüssigen Mediums.

2. Verfahren gemäß Anspruch 1, das ferner den Schritt des Abtrennens des Salzes, das in dem flüssigen Medium im wesentlichen unlöslich ist, umfaßt.

3. Verfahren gemäß Anspruch 2, **dadurch gekennzeichnet, daß** der Schritt des Abtrennens des flüssigen Mediums durchgeführt wird vor dem Schritt des Abtrennens des Salzes, das in dem flüssigen Medium im wesentlichen unlöslich ist.

4. Verfahren gemäß Anspruch 2, **dadurch gekennzeichnet, daß** der Schritt des Abtrennens des flüssigen Mediums durchgeführt wird nach dem Schritt des Abtrennens des Salzes, das in dem flüssigen Medium im wesentlichen unlöslich ist.

5. Verfahren gemäß Anspruch 2, **dadurch gekennzeichnet, daß** das Salz, das in dem flüssigen Medium im wesentlichen unlöslich ist, durch Filtrieren abgetrennt wird.

6. Verfahren gemäß Anspruch 1, **dadurch gekennzeichnet, daß** das flüssige Medium durch Verdampfung abgetrennt wird.

7. Verfahren gemäß Anspruch 1, das ferner den Schritt des Abtrennens des zweiten Metallfullerids umfaßt.

8. Verfahren gemäß mindestens einem der vorhergehenden Ansprüche, **dadurch gekennzeichnet, daß** das flüssige Medium ausgewählt ist aus flüssigem Ammoniak, Trimethylamin, Triethylamin oder einer Mischung davon.

9. Verfahren gemäß mindestens einem der vorhergehenden Ansprüche, **dadurch gekennzeichnet,**

**daß** das erste Metall ausgewählt ist aus der Gruppe umfassend Alkali- und Erdalkalimetalle.

10. Verfahren gemäß Anspruch 9, **dadurch gekennzeichnet, daß** das erste Metall ausgewählt ist aus der Gruppe umfassend Lithium, Natrium und Calcium.

11. Verfahren gemäß mindestens einem der vorhergehenden Ansprüche, **dadurch gekennzeichnet, daß** das zweite Metall ausgewählt ist aus der Gruppe umfassend Übergangselemente, Lanthanide und Actinide.

12. Verfahren gemäß Anspruch 11, **dadurch gekennzeichnet, daß** das zweite Metall ausgewählt ist aus der Gruppe umfassend Kalium, Rubidium und Gadolinium.

## Revendications

1. Procédé de production d'un fullerénure métallique, qui comprend les étapes consistant à :

- prendre un premier fullerénure métallique ayant, comme ion opposé, un cation d'un premier métal,
- faire réagir dans un milieu liquide, ledit premier fullerénure métallique avec un sel d'un second métal, ledit sel d'un second métal étant pratiquement soluble dans ledit milieu liquide et ladite étape de réaction comprenant :

  - la formation d'un second fullerénure métallique ayant, comme ion opposé, un cation dudit second métal, et
  - la formation d'un sel dudit premier métal, ce sel étant pratiquement insoluble dans ledit milieu liquide, et

- séparer ledit milieu liquide.

2. Procédé selon la revendication 1, qui comprend en outre l'étape de séparation dudit sel pratiquement insoluble dans ledit milieu liquide.

3. Procédé selon la revendication 2, **caractérisé en ce que** on réalise l'étape de séparation du milieu liquide avant l'étape de séparation du sel pratiquement insoluble dans le milieu liquide.

4. Procédé selon la revendication2, **caractérisé en ce que** on réalise l'étape de séparation du milieu liquide après l'étape de séparation du sel pratiquement insoluble dans le milieu liquide.

5. Procédé selon la revendication 2, **caractérisé en**

**ce que** ledit sel pratiquement insoluble dans ledit milieu liquide est séparé par filtration.

6. Procédé selon la revendication 1, **caractérisé en ce que** ledit milieu liquide est séparé par évaporation.

7. Procédé selon la revendication 1, qui comprend en outre l'étape de séparation dudit second fullerénure métallique.

8. Procédé selon l'une quelconque des revendications précédentes, **caractérisé en ce que** ledit milieu liquide est choisi parmi l'ammoniac liquide, la triméthylamine, la triéthylamine, et leurs mélanges.

9. Procédé selon l'une quelconque des revendications précédentes, **caractérisé en ce que** ledit premier métal est choisi parmi les métaux alcalins et les métaux alcalinoterreux.

10. Procédé selon la revendication 9, **caractérisé en ce que** ledit premier métal est choisi parmi le lithium, le sodium et le calcium.

11. Procédé selon l'une quelconque des revendications précédentes, **caractérisé en ce que** ledit second métal est choisi parmi les éléments de transition, les lanthanides et les actinides.

12. Procédé selon la revendication 11, **caractérisé en ce que** ledit second métal est choisi parmi le potassium, le rubidium et le gadolinium.